# EUROPÄISCHE PATENTSCHRIFT

(11) **EP 2 434 265 B1**
(45) Veröffentlichungstag und Bekanntmachung des Hinweises auf die Patenterteilung: **05.03.2014**
(21) Anmeldenummer: 10401168.9
(22) Anmeldetag: 22.09.2010
(51) Int. Cl.: G01G 21/23, G01G 23/48

(54) **Wägevorrichtung mit thermischer Entkopplung**
Weighing device with thermal decoupling
Dispositif de pesage avec découplage thermique

(43) Veröffentlichungstag der Anmeldung: 28.03.2012
(73) Patentinhaber: Wipotec Wiege- und Positioniersysteme GmbH, 67657 Kaiserslautern (DE)
(72) Erfinder: Gottfriedsen, Jan, 67714 Waldfischbach - Burgalben (DE); Stellwagen, Tobias, 67655 Kaiserslautern (DE)
(74) Vertreter: Eder, Thomas

(56) Entgegenhaltungen:
- EP-A1- 1 876 432
- EP-A2- 1 876 433
- JP-A- 2003 227 743

## Beschreibung

Die Erfindung betrifft eine Wägevorrichtung, insbesondere eine nach dem Prinzip der elektromagnetischen Kraftkompensation arbeitende Wägevorrichtung, mit den Merkmalen des Oberbegriffs des Patentanspruchs 1.

In der Wägetechnik ist es häufig nötig, Komponenten aus unterschiedlichen Materialien miteinander zu verbinden, wobei eine der Komponenten, beispielsweise eine Wägezelle, empfindlich auf mechanische Spannungen reagiert. Solche mechanischen Spannungen können bereits bei der Verbindung der beiden Komponenten entstehen oder durch unterschiedliche thermische Ausdehnung nach einer Temperaturänderung, selbst wenn die beiden Komponenten bei der Ausgangstemperatur spannungslos miteinander verbunden wurden.

Bei einer Wägezelle, die nach dem Prinzip der elektrodynamische Kraftkompensation arbeitet, ist das Hebelwerk häufig aus einem Block aus Aluminium herausgearbeitet. Die Grundplatte hingegen besteht oftmals aus einem anderen Material, beispielsweise aus Edelstahl. Es kann jedoch auch das gesamte Gehäuse der Wägezelle aus Aluminium bestehen und das Gestell, mit dem die Wägezelle verbunden, beispielsweise verschraubt werden soll, kann aus Stahl gefertigt sein. Dabei stellt sich das Problem, dass sich bei Temperaturänderungen die Kontaktflächen verformen oder sogar gegeneinander verschieben. Die Geometrieänderungen oder erzeugten mechanischen Spannungen können sich unter Umständen bis zum messwertgebenden Sensor erstrecken und Messfehler erzeugen.

Zur Vermeidung derartiger Spannungen, die die Genauigkeit des Sensors beeinträchtigen, ist es aus der DE 10 2005 033 952 B4 bekannt, das eigentliche Wägesystem mittels Haltebügeln auf einer Grundplatte zu fixieren, die ihrerseits mit der Grundplatte verbunden sind. Das Wägesystem kann dann freitragend mit den Haltebügeln verbunden, beispielsweise verschraubt sein. So werden zumindest Verwindungen der Grundplatte nicht auf das Wägesystem übertragen. Thermische Spannungen infolge unterschiedlicher Ausdehnungskoeffizienten der Materialien des Wägesystems und der Klammern können jedoch auch bei einer derartigen Befestigung nicht vermieden werden.

Aus der DE 602 06 339 T2 ist eine Befestigung für einen Grundkörper einer nach dem Prinzip der elektromechanischen Kraftkompensation arbeitenden Wägezelle bekannt, wobei der Grundkörper seitliche über das eigentliche Kraftmesssystem hinausragende Flanschelemente aufweist, welche Bohrungen für Befestigungsschrauben tragen. Hierdurch wird versucht zu vermeiden, dass sich durch die Montage verursachte Spannungen auf Bereiche der Wägezelle übertragen, in welchen Spannungen die Genauigkeit des Messergebnisses beeinträchtigen können. Da die Flanschelemente einstückig mit dem übrigen Grundkörper ausgebildet sind, kann dies jedoch nicht sicher vermieden werden.

Ein weiterer, ähnlicher Ansatz ist in der DE 195 35 202 C1 beschrieben. Hier werden durch Einschnitte in den Grundkörper Befestigungsbereiche abgetrennt, um zu vermeiden, dass sich in diesen Bereichen erzeugte Spannungen oder Verwindungen auf den eigentlichen Sensorbereich übertragen, d.h. denjenigen Bereich des Grundkörpers, der Auswirkungen auf die Genauigkeit der Messwerterfassung hat.

Diese bekannten Möglichkeiten können jedoch letztlich kaum vermeiden, dass sich bei bereits gegenüber geringen mechanischen Spannungen empfindlich reagierenden Kraftmesssensoren oder -sensorbereichen von Wägevorrichtungen eine Beeinträchtigung der Messgenauigkeit ergibt.

Schließlich ist aus der JP 2003-227743 A eine Wägevorrichtung bekannt, bei welcher ein Wägesensor über eine Halteklammer mit einer Basis verbunden ist. Die Halteklammer weist lediglich zwei Befestigungsbereiche auf, die mittels jeweils einer Festkörpergelenkstrukur entlang der Verbindungsgeraden durch die beiden Befestigungsbereiche translatorisch bewegbar sind. Auf diese Weise wird eine spannungsfreie Befestigung des Sensors an der Basis erreicht, die auch bei Temperaturänderungen aufrechterhalten wird. Diese Schrift gibt dem Fachmann jedoch keinerlei Anhaltspunkte, wie eine Montage des Sensors in mehr als zwei Befestigungsbereichen erfolgen kann, ohne dass Temperaturänderungen zu mechanischen Spannungen führen, welche sich negativ auf die Messgenauigkeit auswirken.

Aus der EP 1 876 432 A1 oder der EP 1 876 433 A2 ist eine vorteilhafte Ausbildung für ein Wägemodul bekannt, die sich insbesondere für eine Mehrpunktwaage eignet. Das Wägemodul ermöglicht dabei, je nach Ausbildung, die im Wesentlichen fixierte Position einer oberen und einer unteren Montageeinrichtung oder die frei bewegliche oder in einer Vorzugsrichtung bewegliche Führung der oberen und unteren Montageeinrichtung relativ zueinander. Werden drei oder mehr derartige Wägemodule für eine Mehrpunktwaage verwendet, so lehren diese Schriften zum Zweck des Vermeidens von thermischen bzw. mechanischen Spannungen das Vorsehen jeweils eines fixierten Wägemoduls und eines in einer vorgegebenen Vorzugsrichtung beweglichen Wägemoduls. Weitere Wägemodule weisen jeweils eine freie Beweglichkeit in allen Richtungen parallel zur Ebene der oberen bzw. unteren Montageeinrichtung auf.

Der Erfindung liegt ausgehend von diesem Stand der Technik die Aufgabe zugrunde, eine Wägevorrichtung zu schaffen, welche sowohl bei der Montage der eigentlichen Wägesensoreinheit als auch bei Temperaturschwankungen nach der Montage vermeidet, dass sich Spannungen auf den empfindlichen Bereich der Wägesensoreinheit übertragen und sich nachteilig auf die Genauigkeit der Messwerterfassung bzw. die Temperaturstabilität und Langzeitstabilität der Wägevorrichtung auswirken.

Die Erfindung löst diese Aufgabe mit den Merkmalen des Patentanspruchs 1.

Die Erfindung geht von der Erkenntnis aus, dass Dehnungen aufgrund von Temperaturänderungen einer mathematischen Ähnlichkeitsabbildung entsprechen, d.h. die Längenverhältnisse und Winkel des Körpers bleiben erhalten. Die Verschiebungen der Befestigungspunkte gegeneinander bei Temperaturausdehnungen von Elementen, die aus unterschiedliche Materialien bestehen, sind also nicht beliebig, sondern unterliegen der vorgenannten Gesetzmäßigkeit.

Die beiden Komponenten mit unterschiedlichen Materialien werden in mindestens drei Befestigungsbereichen miteinander verbunden. Die Befestigungsbereiche, d.h. die Bereiche der beiden Komponenten, in welchen die Komponenten formschlüssig, kraftschlüssig oder stoffschlüssig fest miteinander verbunden sind, weisen eine gegenüber den Gesamtabmessungen der Komponenten geringe Ausdehnung auf, so dass Spannungen, die sich innerhalb der Befestigungsbereiche ausbilden können, hinsichtlich ihrer Auswirkung auf die Wägesensoreinheit vernachlässigt werden können. Idealerweise wären die Befestigungsbereiche punktförmig, was sich technisch jedoch nicht realisieren lässt. In der Praxis weisen die Befestigungsbereiche beispielsweise Abmessungen auf, die für das Realisieren einer Schraubverbindung erforderlich sind.

Die Wägesensoreinheit der Wägevorrichtung stellt die eine der beiden zu verbindenden Komponenten dar, wobei die Wägesensoreinheit mit einer weiteren Einheit, beispielsweise einer Trägerplatte oder einer Lastplatte, in den wenigstens drei Befestigungsbereichen verbunden ist. Der Begriff der Wägesensoreinheit der Wägevorrichtung soll im Rahmen dieser Beschreibung alles umfassen, was fest (einstückig oder lösbar) mit dem eigentlichen Sensorbereich, auf welchen die Einleitung der Lastkraft erfolgt, verbunden ist. Beispielsweise kann es sich bei der Wägesensoreinheit sowohl um den sogenannten Monoblock einer nach dem Prinzip der elektromagnetischen Kraftkompensation arbeitenden Messzelle handeln als auch um ein Gehäuse, in welchem ein derartiger Monoblock aufgenommen ist. Die erfindungsgemäße Befestigung kann insbesondere zwischen der Wägesensoreinheit bzw. dem Monoblock als solches und einer Bodenplatte oder Trägerplatte erfolgen, oder zwischen einem den Monoblock aufnehmenden und fest mit diesem verbundenen Gehäuse und einer Bodenplatte oder Trägerplatte, wobei die Bodenplatte in der Terminologie der vorliegenden Beschreibung die weitere Einheit darstellt. Die Befestigung kann aber beispielsweise auch zwischen einer weiteren Einheit, wie einer Lastplatte, und der Wägesensoreinheit bzw. einem Monoblock erfolgen.

In wenigstens zwei der wenigstens drei Befestigungsbereiche ist erfindungsgemäß jeweils ein entweder an der Wägesensoreinheit oder an der weiteren, damit zu verbindenden Einheit angeordneter Verbindungsbereich vorgesehen. Jeder Verbindungsbereich ist so mittels einer Gelenkstruktur mit der Wägesensoreinheit bzw. der weiteren Einheit verbunden bzw. an dieser gelagert, dass er eine lineare (translatorische) oder zumindest annähernd lineare Verschiebebewegung in Richtung der Verbindungslinie zwischen einem beliebigen, für alle Verbindungsbereiche gemeinsamen Bezugspunkt und einem Zentrum des jeweiligen Befestigungsbereichs ausführen kann. Auf diese Weise führen Temperaturausdehnungen nicht zu erhöhten Spannungen in den miteinander verbunden Komponenten sondern zu einer linearen Bewegung der Befestigungspunkte relativ zu dem gewählten Bezugspunkt. Der durch die Gelenkstruktur ermöglichte Bewegungsweg muss zumindest so groß sein, wie der maximal mögliche Unterschied der Temperaturausdehnungen zwischen der weiteren Einheit und der Wägesensoreinheit entlang der Linie zwischen dem Bezugspunkt und dem betreffenden Zentrum des Verbindungsbereichs in einem vorgegebenen Temperaturbereich.

Erfindungsgemäß kann jeder Verbindungsbereich durch eine Festkörpergelenkstruktur mit dem Grundkörper bzw. der Trägereinheit derart verbunden sein, dass sich die vorstehend erläuterte Bewegungsfreiheit ergibt. Die Festkörpergelenkstruktur kann monolithisch mit dem Grundkörper oder der damit verbundenen Einheit ausgebildet sein oder auch mittels separater Elemente, beispielsweise Blattfedern.

Nach der bevorzugten Ausführungsform der Erfindung umfasst die Festkörpergelenkstruktur wenigstens eine Dünnstelle.

Nach einer Ausgestaltung der Erfindung ist die weitere Einheit in einem der Befestigungsbereiche im Wesentlichen starr mit der Wägesensoreinheit verbunden und das Zentrum dieses Befestigungsbereichs bildet den Bezugspunkt. Anstelle einer vollständig starren Verbindung kann in diesem, den Bezugspunkt definierenden Befestigungsbereich jedoch auch ein an der Wägesensoreinheit oder der weiteren Einheit ausgebildeter Verbindungsbereich vorgesehen sein, wobei dieser Verbindungsbereich allenfalls eine marginale translatorische Bewegung in der gewünschten Richtung zulässt. Dieser Verbindungsbereich kann jedoch so ausgestaltet sein, dass er ein Verkippen oder geringe translatorische Bewegungen in Richtungen zulässt, die erforderlich sind um nicht bereits bei der Montage infolge von Fertigungstoleranzen bei der Ausbildung der Auflageflächen der beiden Komponenten in den Befestigungsbereichen Spannungen zu erzeugen. Beispielsweise kann ein derartiger "Bezugspunkt-Verbindungsbereich" über eine oder mehrere Dünnstellen mit dem übrigen Teil der betreffenden Komponente verbunden sein, wobei die Dünnstellen die erforderlichen geringfügigen Verkippungen oder translatorischen Bewegungen in andere Richtungen als den Richtungen zwischen dem Bezugspunkt und den Zentren der Befestigungsbereiche ermöglichen. Derartige zusätzliche Bewegungen werden auch durch die erfindungsgemäßen Festkörpergelenke in denjenigen Verbindungsbereichen ermöglicht, die keinen Bezugspunkt definieren.

Nach einer weiteren Ausgestaltung der Erfindung können die Befestigungsbereiche in einer Ebene liegen, d.h. alle Auflageflächen in den Verbindungsbereichen liegen in einer Ebene. Hierdurch ergibt sich eine konstruktiv einfache Realisierung der erfindungsgemäßen spannungsfreien Kopplung zwischen den beiden Komponenten. Selbstverständlich können nach der allgemeine Lehr der Erfindung die Auflageflächen auch beliebig 3-dimensional positioniert sein.

In einer Alternative der Erfindung kann der Bezugspunkt auf der Geraden liegen, die durch die Achse definiert ist, in welcher die Lastkraftauf die Wägesensoreinheit wirk, wobei für den vorstehenden Fall der Ausbildung aller Befestigungsbereiche in einer Ebene der Bezugspunkt vorzugsweise im Schnittpunkt der Lastkraftrichtung mit dieser Ebene gewählt wird.

Die Verbindungsbereiche können in einer Ausführungsform der Erfindung an der mit der Wägesensoreinheit zu verbindenden Einheit vorgesehen sein, die beispielsweise als Trägerplatte oder Lastplatte ausgebildet sein kann.

Nach der bevorzugten Ausführungsform der Erfindung umfasst die Gelenkstruktur wenigstens ein Koppelelement, welches an einem Ende über jeweils ein erstes, vorzugsweise als Dünnstelle ausgebildetes Gelenk mit dem Verbindungsbereich und über ein zweites, vorzugsweise als Dünnstelle ausgebildetes Gelenk mit der mit der Wägesensoreinheit zu verbindenden Einheit oder mit der Wägesensoreinheit selbst verbunden ist, wobei die Schwenkachsen der Gelenke zueinander parallel und senkrecht zu der Richtung der Verbindungsgeraden durch das Zentrum der betreffenden Verbindungsbereichs und den Bezugspunkt verlaufen.

Die Gelenke sind vorzugsweise so ausgebildet, dass die durch die Schwenkachsen definierte Ebene senkrecht zur Verbindungsgeraden durch den Bezugspunkt und das Zentrum des betreffenden Verbindungsbereichs liegt. Damit ergibt sich für den Verbindungsbereich abhängig vom Abstand zwischen den Schwenkachsen eine mögliche Verschiebebewegung entlang einer Kreisbahn, deren Mittelpunkt durch die weiter entfernt liegende Schwenkachse definiert ist. Der Verbindungsbereich selbst kann dabei durch die gelenkige Anbindung an das Koppelelement über die näher liegende Dünnstelle in seiner rotatorischen Ausrichtung verbleiben, d.h. er selbst wird nicht verschwenkt. Der Verbindungsbereich kann somit fest mit der jeweils anderen Komponente verbunden, beispielsweise verschraubt sein. Die Verschiebebewegung selbst liegt auf einer Kreisbahn, deren Radius durch den Abstand der beiden Schwenkachsen festgelegt ist. Da eine im Wesentlichen lineare translatorische Bewegung in der Richtung entlang der Verbindungsgeraden durch den Bezugspunkt und das Zentrum des betreffenden Verbindungsbereichs gewünscht ist, wird man den Abstand der Schwenkachsen so groß wählen, dass die Krümmung der vorgegebenen Bewegungskurve gegenüber dem gewünschten linearen Bewegungsweg vernachlässigbar ist. Mit anderen Worten, der Radius der vorgegebenen Bewegungsbahn wird so groß gewählt, dass im gesamten gewünschten Bewegungsweg in der Richtung der Verbindungsgeraden von Bezugspunkt und Zentrum des Verbindungsbereichs die Bedingung erfüllt ist, dass der seitliche Versatz infolge der Kreisbahn klein ist gegenüber dem entsprechenden Bewegungsweg in der gewünschten Richtung.

Nach einer weiteren Ausführungsform kann die Gelenkstruktur zwei (oder auch mehr) derartig gelenkig angebundene Koppelelemente umfassen, welche parallelogrammartig angeordnet sind. Damit ist der Verbindungsbereich in seiner Lage so fixiert, dass er auch ohne feste Verbindung mit dem jeweils anderen Element keine Schwenkbewegung, sondern nur die vorbeschriebene Verschiebebewegung in der Ebene senkrecht zu den beiden Schwenkachsen der Dünnstellen entlang der vorgegebenen Kreisbahn ausführen kann.

Nach einer anderen Ausgestaltung der Erfindung kann die Gelenkstruktur zwei oder mehr Koppelelemente umfassen, welche über jeweils zwei Gelenke, die wiederum als Dünnstellen ausgebildet sein können, mit dem Verbindungsbereich und der mit der Wägesensoreinheit zu verbindenden Einheit mit der Wägesensoreinheit selbst verbunden sind, wobei die Gelenkachsen jeweils eines Koppelelements in einer Ebene liegen und wobei jeweils ein oder meherere Koppelelemente jeweils auf gegenüberliegenden Seiten des Verbindungsbereichs angeordnet sind.

Die Wägesensoreinheit kann Befestigungsfüße aufweisen, welche auf Verbindungsbereichen der damit verbundenen Einheit aufliegen und welche mit den Verbindungsbereichen verbunden sind, vorzugsweise durch Verschrauben. Hierdurch ergibt sich eine einfache, konstruktive und kostengünstige Ausgestaltung. Selbstverständlich kann in analoger Weise auch die mit der Wägesensoreinheit verbundene Einheit Befestigungsfüße aufweisen, die auf Verbindungsbereichen der Wägesensoreinheit aufliegen und damit verbunden sind.

Weitere Ausführungsformen ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine perspektivische Draufsicht auf eine Wägevorrichtung bestehend aus einer Wägezelle, die in drei Befestigungsbereichen auf einer Trägerplatte montiert ist, wobei einer der Befestigungsbereiche einen im Wesentlichen ortsfesten Bezugspunkt bildet;
- Fig. 2: eine vergrößerte Darstellung eines Befestigungsbereichs der Ausführungsform in Fig. 1;
- Fig. 3: eine Draufsicht auf die Wägevorrichtung in Fig. 1;
- Fig. 4: eine vergrößerte Darstellung eines Befestigungsbereichs einer weiteren Ausführungsform ähnlich Fig. 1, jedoch mit einem Verbindungsbereich, welcher über ein parallelogrammartiges Festkörpergelenk mit der Trägerplatte verbunden ist;
- Fig. 5: eine Draufsicht auf eine Trägerplatte für eine Wägezelle, welche in vier Befestigungsbereichen mit der Trägerplatte verschraubbar ist, wobei einer der Befestigungsbereiche einen ortsfesten Bezugspunkt bildet;
- Fig. 6: eine Draufsicht auf die Wägevorrichtung ähnlich Fig. 1, wobei jedoch ein virtueller Bezugspunkt in der Mitte des Lastaufnehmers definiert ist;
- Fig. 7: eine Draufsicht auf eine weitere Ausführungsform einer Wägevorrichtung ähnlich den Fig. 1 bis 3, wobei der einen ortsfesten Bezugspunkt definierende Befestigungsbereich völlig starr ausgebildet ist;
- Fig. 8: eine perspektivische Draufsicht auf eine Wägevorrichtung, bestehend aus einer Sensoreinheit, die eine Zwischenplatte aufweist, auf welcher in drei Befestigungsbereichen eine Lastplatte montiert ist, wobei einer der Befestigungsbereiche einen ortsfesten Bezugspunkt bildet; und
- Fig. 9: eine perspektivische Seitenansicht der Wägevorrichtung in Fig. 8, wobei auf der Zwischenplatte eine Lastplatte montiert ist.

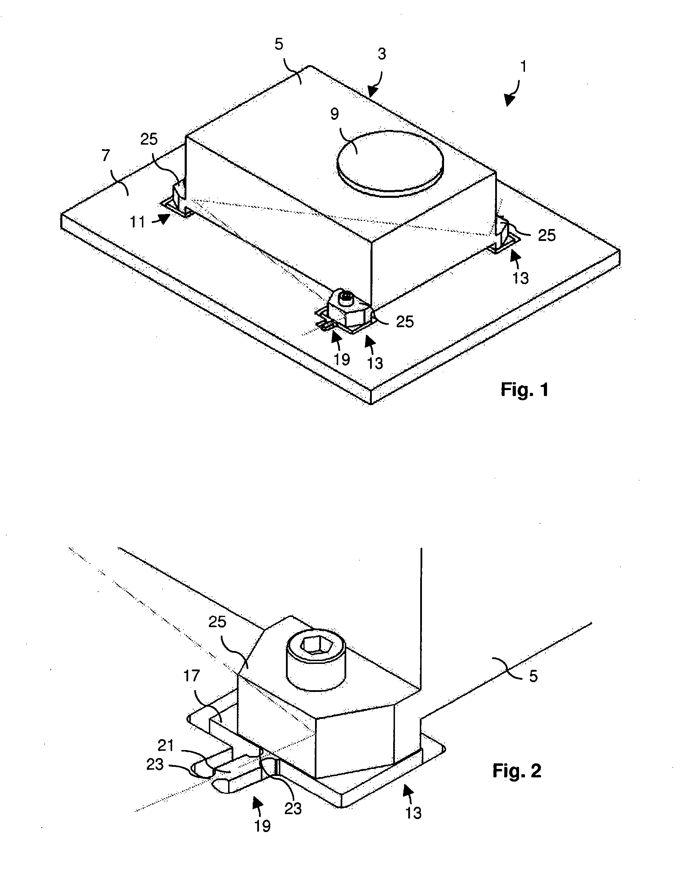

Die in Fig. 1 dargestellte Wägevorrichtung 1 umfasst eine als Wägezelle 3 ausgebildete Wägesensoreinheit 5. Die Wägesensoreinheit 5 weist ein Gehäuse auf, in welchem der eigentliche Wägesensor (nicht dargestellt) angeordnet ist. Der Wägesensor kann beispielsweise nach dem Prinzip der elektromagnetischen Kraftkompensation arbeiten und einen Grundkörper umfassen, der einen ortsfesten Bereich aufweist, an dem über zwei Parallelogrammlenker ein Lastaufnehmer 9 angeordnet ist. Die Bewegung der Parallelogrammlenker kann über ein ein- oder mehrstufiges Hebelgetriebe auf einen Hebelarm des letzten Hebels übertragen werden. An dem letzten Hebel ist ein Magnetsystem angeordnet, welches einen Elektromagneten umfasst, dessen Spulenstrom so geregelt wird, dass der betreffende letzte Hebelarm in einer definierten Position gehalten wird. Der Spulenstrom dient dann als Maß für die Lastkraft, die den Lastaufnehmer 9 beaufschlagt.

Grundsätzlich kann die Wägesensoreinheit 5 jedoch auch in beliebiger anderer Weise ausgebildet sein. Ziel der Erfindung ist es, eine gegen mechanische Spannungen empfindliche Wägesensoreinheit 5 einer Wägevorrichtung 1, sei es eine komplette Wägezelle oder den eigentlichen Wägesensor, derart mit einer weiteren Einheit oder Komponente, beispielsweise einer als Trägerplatte 7 ausgebildeten Trägereinheit zu verbinden, dass auch im Fall unterschiedlicher Materialien, die für die beiden Komponenten verwendet sind, unterschiedliche Temperaturausdehnungen nicht zu unzulässig hohen Spannungen in den beiden Komponenten, insbesondere der Wägesensoreinheit 5 führen.

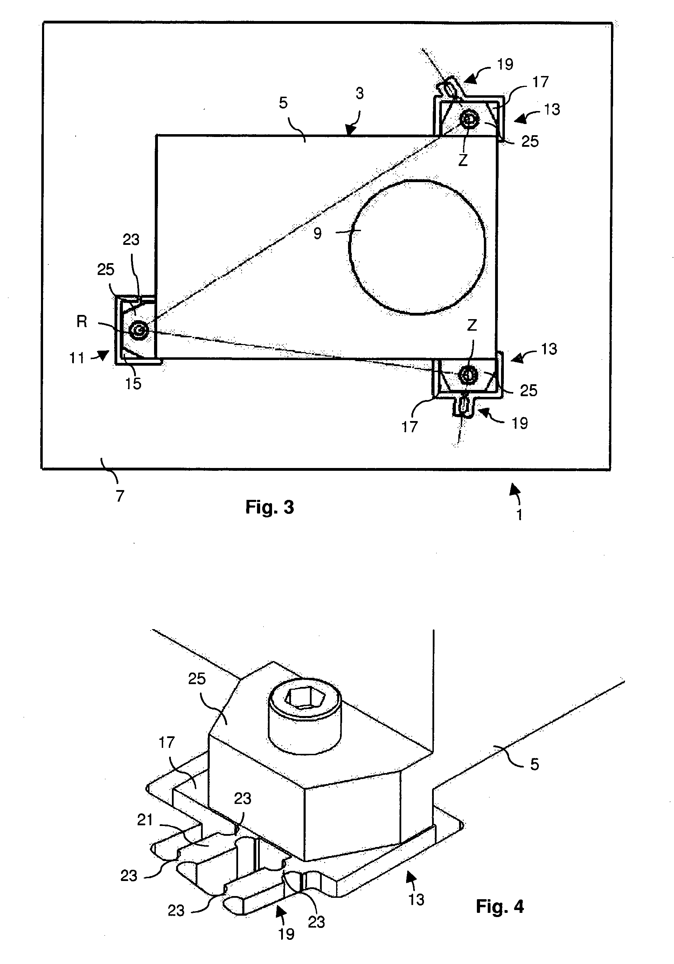

Die Wägezelle 3 ist bei der in Fig. 1 dargestellten Ausführungsform an drei Befestigungsbereichen 11 bzw. 13 mit der Trägerplatte 7 verbunden, wobei die Befestigung im Befestigungsbereich 11 im Wesentlichen starr bzw. ortsfest ausgebildet ist und die Befestigungsbereiche 13 geringfügige Relativbewegungen zwischen der Wägezelle 3 bzw. dem Gehäuse 5 der Wägezelle 3 und der Trägerplatte 7 ermöglichen. Der im Wesentlichen starre bzw. ortsfeste Befestigungsbereich 11 dient als Bezugspunkt R (Fig. 3).

In den Befestigungsbereichen 11, 13 sind in der Trägerplatte Verbindungsbereiche 15, 17 ausgebildet, wobei die Verbindungsbereiche 17 im Wesentlichen translatorisch entlang der Verbindungsgeraden durch jeweils den Bezugspunkt R und das Zentrum Z der Verbindungsbereiche 17 bewegbar sind. Das Zentrum Z der Verbindungsbereiche 17 kann beispielsweise als Schwerpunkt der Oberfläche des betreffenden Verbindungsbereichs 17 definiert sein. Letztlich ist die exakte Lage des Zentrums Z in der Praxis jedoch ohne große Bedeutung, da die räumliche Ausdehnung der Befestigungsbereiche 11, 13 bzw. der Verbindungsbereiche 15, 17 klein gewählt werden muss gegenüber den räumlichen Abmessungen der Messzelle 3, um nicht durch eine kraftschlüssige, formschlüssige oder gar stoffschlüssige Verbindung der beiden Komponenten in den Befestigungsbereichen 11, 13 thermische Spannungen zu erzeugen.

Die Punkte der Zentren Z bzw. der Bezugspunkt R liegen in den Berührungsflächen zwischen der Wägezelle 3 und der Trägerplatte 7 bzw. den betreffenden Verbindungsbereichen 15, 17.

An dieser Stelle sei bemerkt, dass bei den in den Figuren dargestellten Ausführungsformen die Befestigungsbereiche bzw. die Auflageflächen, in denen die Wägezelle 3 und die beispielsweise als Trägerplatte 7 ausgebildete Einheit aneinander anliegen, in einer Ebene liegen. Dies ist jedoch nicht erforderlich, um die Erfindung zu verwirklichen. Es ist vielmehr ebenfalls möglich, die Befestigungsbereiche in beliebiger räumlicher Anordnung vorzusehen.

In jedem Fall müssen die Verbindungsbereiche 17, die eine im Wesentlichen translatorische Relativbewegung zwischen den beiden Komponenten ermöglichen, so an der betreffenden Komponente, d.h. an der Trägereinheit 7 bzw. an der Wägesensoreinheit 5 angeordnet sein, dass die jeweils gewünschte translatorische Bewegungsrichtung in der jeweiligen Verbindungsgeraden zwischen dem Bezugspunkt R und dem Zentrum Z des betreffenden Verbindungsbereichs 17 erfolgt.

Wie aus den Fig. 1 bis 3 ersichtlich, sind die im Wesentlichen translatorisch bewegbaren Verbindungsbereiche 15, 17 über eine Gelenkstruktur 19, die als Festkörpergelenkstruktur ausgebildet ist, mit der Trägerplatte 7 verbunden.

An dieser Stelle sei bemerkt, dass eine im Wesentlichen translatorische, d.h. lineare Verschiebebewegung auch durch eine Verschiebebewegung entlang einer gekrümmten Bahn (in einer Ebene liegend) angenähert werden kann. Hierbei kann es sich beispielsweise um eine Kreisbahn mit ausreichend großem Radius handeln.

Die Gelenkstruktur 19 besteht aus einem Koppelelement 21, welches über ein als Dünnstelle 23 ausgebildetes Gelenk mit der Trägerplatte 7 und über ein weiteres, als Dünnstelle 23 ausgebildetes Gelenk mit dem Verbindungsbereich 17 verbunden ist. Wird der Verbindungsbereich 17 mittels der in den Fig. 1 - 3 dargestellten Schraubverbindung mit jeweils einem Fuß 25 des Gehäuses 5 der Wägezelle 3 verbunden, so wird durch die kraftschlüssige Verbindung zwischen dem Fuß 25 und dem Verbindungsbereich 17 eine grundsätzlich mögliche Rotationsbewegung des Verbindungsbereichs 17 um die Schwenkachse, welche durch die Dünnstelle 23 zwischen dem Koppelelement 21 und dem Verbindungsbereich 17 definiert ist blockiert. Damit verbleibt eine im Wesentlichen translatorische Bewegungsmöglichkeit für den Verbindungsbereich 17 bzw. den damit verbundenen Fuß 25 in der Richtung der Verbindungsgeraden zwischen dem Bezugspunkt R und dem betreffenden Zentrum Z des Verbindungsbereichs 17. Streng genommen handelt es sich hierbei um eine Kreisbewegung, wobei der Radius der Kreisbewegung durch den Abstand der Schwenkachse, die durch die Dünnstellen 23 definiert sind, festgelegt ist. Da die durch thermische Ausdehnungen bewirkten Relativbewegungen zwischen dem Gehäuse 5 und der Trägerplatte 7 relativ gering sind, genügt es, für das Koppelelement 21 bzw. den Abstand der Schwenkachsen der Dünnstellen 23 einen ebenfalls relativ geringen Abstand zu wählen, um die gewünschte translatorische Bewegung mit hinreichender Genauigkeit durch die eigentliche Kreisbewegung anzunähern.

Wie aus Fig. 2 ersichtlich, kann der Verbindungsbereich durch einfache spanabhebende Bearbeitung in der Trägerplatte 7 realisiert werden. Gleiches gilt für die Herstellung des Koppelelements 21 und die Dünnstellen 23. Die Dünnstellen 23 wird man mit einer solchen Stärke ausbilden, die einerseits eine ausreichende Festigkeit bzw. Robustheit der Anlenkung des Verbindungsbereichs 17 an die Trägerplatte 7 gewährleistet und andererseits einen ausreichend geringen Widerstand gegenüber Biegebewegungen um die jeweilige Schwenkachse realisiert. Die Ausbildung der Festkörpergelenke 19 erfolgt vorzugsweise auch so, dass Schwingungsbewegungen zwischen der Wägezelle 3 und der Trägerplatte 7 in Folge von auf diese Komponenten wirkenden Bewegungen, beispielsweise Vibrationen, weitgehend vermieden bzw. ausreichend gedämpft werden.

Wie in Fig. 2 ersichtlich, kann das Koppelelement 21 ebenso wie die Dünnstellen 23 symmetrisch zu einer Mittenebene ausgebildet sein. Die Schwenkachsen der Dünnstellen 23 liegen dann in der betreffenden Mittenebene im Bereich der geringsten Dicke der Dünnstellen 23. Es ist jedoch auch möglich, die Dünnstellen 23 bzw. das Koppelelement 21 anders anzuordnen bzw. auszubilden. Es ist lediglich dafür Sorge zu tragen, dass die durch das Koppelelement und die beiden Dünnstellen 23 definierte Kreisbewegung die gewünschte translatorische Bewegung mit ausreichender Genauigkeit annähert.

Die in Fig. 2 dargestellte Anordnung im Befestigungsbereich 13, bei welcher die Mittenebene bzw. die durch die beiden Schwenkachsen der Dünnstellen 23 definierte Ebene senkrecht zur gewünschten Bewegungsrichtung verläuft, weist jedoch den Vorteil auf, dass die hierdurch definierte Kreisbewegung in beiden Bewegungsrichtungen nur jeweils geringfügig von der gewünschten translatorischen Bewegungsrichtung abweicht.

Wie aus den Fig. 1 und 3 ersichtlich, kann der Verbindungsbereich 15 im Befestigungsbereich 11 ebenfalls über eine Dünnstelle 23 mit der Trägerplatte 7 verbunden sein. Diese Dünnstelle 23 lässt allenfalls minimale Bewegungen des Verbindungsbereichs 15 bzw. des Bezugspunkts R zu. Hauptaufgabe dieser Dünnstelle 23 ist es, durch eine Deformation der Dünnstelle 23 Fertigungstoleranzen hinsichtlich der Ebenheit der Trägerplatte 7 bzw. der unteren Auflageflächen der Füße 25 des Gehäuses 5, die idealerweise in einer Ebene liegen sollten, auszugleichen. Die Dünnstelle 23 lässt dabei leichte Kippbewegungen zu, um die Oberfläche des Verbindungsbereichs 15 möglichst gleichförmig an die Unterseite des betreffenden Fußes 25 anzudrücken.

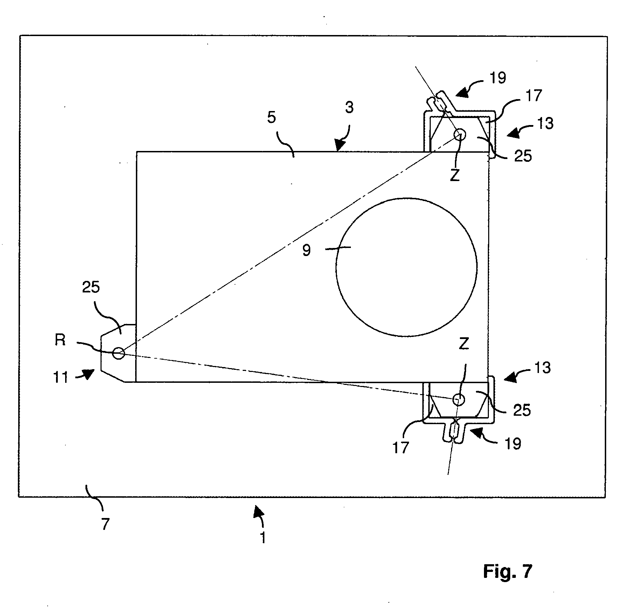

Die in Fig. 7 dargestellte Variante einer Wägevorrichtung 1 zeigt eine Trägerplatte 7 für die Wägezelle 3, wobei die Trägerplatte 7 im Befestigungsbereich 11, anders als bei der Ausführungsform nach Fig. 1 bis 3 keinen separaten Verbindungsbereich aufweist. Vielmehr wird der betreffende Fuß 25 der Wägezelle 2 unmittelbar über die in Fig. 7 dargestellte Bohrung mit der Trägerplatte 7 fest verbunden, wobei der Schnittpunkt der Achse der Bohrung mit der Oberfläche der Trägerplatte 7 den Bezugspunkt R bildet.

Fig. 4 zeigt eine weitere Ausführungsform für eine als Festkörpergelenkstruktur 19 ausgebildete Gelenkstruktur, welche zwei Koppelelemente 21 umfasst, die jeweils über durch Dünnstellen 23 gebildete Festkörpergelenke mit dem Verbindungsbereich 17 bzw. der Trägerplatte 7 verbunden sind. Die Koppelelemente 21 und Dünnstellen 23 definieren ein Parallelogramm, wobei die Schwenkachsen, die durch die Dünnstellen 23 definiert sind, in zwei zueinander parallelen Mittenebenen liegen. Die Mittenebenen bilden gleichzeitig die Symmetrieebenen für die Dünnstellen 23 und die Koppelelemente 21.

Eine derart ausgebildete Festkörpergelenkstruktur 19 bietet den Vorteil einer höheren Steifigkeit und zudem wird für den Verbindungsbereich 17 bereits ohne eine kraftschlüssige Verbindung mit dem betreffenden Fuß 25 des Gehäuses 5 nur eine im Wesentlichen translatorische Bewegung ermöglicht.

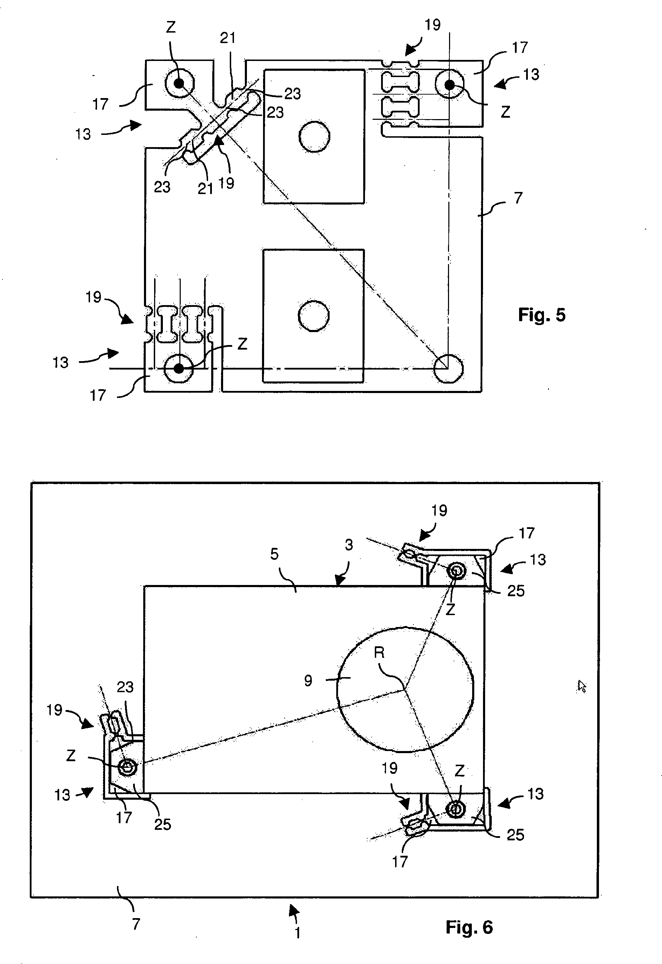

In Fig. 5 ist eine weitere Alternative für eine als Trägerplatte 7 ausgebildete Einheit dargestellt, die mit dem Gehäuse 5 einer Wägezelle 3 verbindbar ist. Auch diese Trägerplatte 7 weist einen ortsfesten Befestigungsbereich 11 auf, welcher eine Bohrung für das Herstellen einer Schraubverbindung mit dem auf der Grundplatte zu montierenden Element, beispielsweise einer Wägezelle oder einem Wägesensor, umfasst. Die Achse der Bohrung bzw. der Schnittpunkt der Achse mit der Oberfläche der Trägerplatte 7 bildet den Bezugspunkt R.

Weiterhin umfasst die Trägerplatte 7 drei translatorisch bewegliche Verbindungsbereiche 17, welche ebenfalls jeweils eine Bohrung zum Herstellen einer Schraubverbindung mit dem weiteren, mit der Trägerplatte 7 zu verbindenden Element aufweisen. Die Verbindungsbereiche 17 sind jeweils so angeordnet, dass das Zentrum Z jedes Verbindungsbereichs, welches jeweils durch die Achse der Bohrung im Schnittpunkt der Achse mit der Oberfläche des betreffenden Verbindungsbereichs 17 liegt, im Wesentlichen rein translatorisch entlang der Verbindungsgeraden durch den Bezugspunkt R und das betreffende Zentrum Z beweglich ist. Hierzu sind zwei der Verbindungsbereiche 17 jeweils wieder über eine parallelogrammartige Festkörpergelenkstruktur 19 mit der Trägerplatte 7 verbunden. Die Festkörpergelenkstruktur 19 weist hierbei jedoch, anders als bei der Ausführungsform nach Fig. 4, drei Parallelogrammlenker auf, wobei jeder dieser Parallelogrammlenker so ausgeführt ist, wie im Fall der Ausführungsform nach Fig. 4.

Die Verwendung einer höheren Anzahl von Parallelogrammlenkern führt zu einer verbesserten Verwindungssteifigkeit in Richtungen bzw. um Rotationsachsen, die nicht mit der Richtung der Rotationsachsen der betreffenden Dünnstellen übereinstimmen oder hierzu parallel sind.

Der dritte der beweglichen Verbindungsbereiche 17 ist über eine Festkörpergelenkstruktur 19 mit der Trägerplatte 7 verbunden, welche ebenfalls zwei Koppelelemente 21 aufweist, die jeweils über eine Dünnstelle 23 mit dem Verbindungsbereich und über eine weitere Dünnstelle 23 mit der Trägerplatte 7 verbunden sind. Die beiden Koppelelemente sind jedoch auf einander gegenüberliegenden Seiten des Verbindungsbereichs 17 vorgesehen, wobei sämtliche Schwenkachsen, die durch die Dünnstellen 23 gebildet sind, in einer Ebene liegen. Diese Ebene bildet gleichzeitig wiederum die Mittenebene der symmetrisch ausgebildeten Koppelelemente 21 und Dünnstellen 23.

Diese Variante einer Festkörpergelenkstruktur 19 bietet sich insbesondere dann an, wenn, wie in Fig. 5 dargestellt, der betreffende Verbindungsbereich an einer zum Bezugspunkt R diagonal liegenden Ecke einer rechteckförmigen Trägereinheit liegt.

Die in Fig. 6 dargestellte Draufsicht auf eine Wägevorrichtung 1 ist weitgehend identisch bzw. ähnlich mit der Ausführungsform nach den Fig. 1 bis 3. Anders als bei der in Fig. 3 dargestellten Ausführungsform ist hier jedoch der in Fig. 3 im Wesentlichen starr ausgebildete Verbindungsbereich 15 ebenfalls als translatorisch beweglicher Verbindungsbereich 17 ausgebildet. Der Bezugspunkt R ist hier im Schnittpunkt der Vertikalen durch das Zentrum des Lastaufnehmers 9 mit der Oberfläche der Trägerplatte 7 gebildet. Die Verbindungsbereiche sind, ebenso wie bei der Ausführungsform nach den Fig. 1 bis 3, durch einfache Festkörpergelenkstrukturen 19 mit der Trägerplatte 7 verbunden, die mit den Festkörpergelenkstrukturen 19 der Ausführungsformen nach den Fig. 1 bis 3 identisch sind. Lediglich die im Wesentlichen translatorischen Bewegungsrichtungen sind geringfügig anders gewählt, nämlich so, dass jeder der Verbindungsbereiche 17 entlang der Verbindungsgeraden durch die Zentren Z der Verbindungsbereiche 17 (der Schnittpunkt der Längsachsen der Bohrungen für die Schraubverbindungen mit der jeweiligen Oberfläche des Verbindungsbereichs 17) und den Bezugspunkt R bewegbar ist.

Selbstverständlich können auch für diese Gelenkstrukturen die vorbeschriebenen weiteren Varianten verwendet werden. Gleiches gilt selbstverständlich auch für jede beliebige andere Struktur eines Festkörpergelenks, welche die Bewegung in der gewünschten (im Wesentlichen) translatorischen Bewegungsrichtung ermöglicht.

Die in Fig. 6 dargestellte Ausführungsform einer Wägevorrichtung 1 weist den Vorteil auf, dass auch bei thermischen Ausdehnungen das Zentrum des Lastaufnehmers 9 exakt an der gewünschten Position verbleibt. Dies gilt zumindest dann, wenn die Energie für die Deformation der einzelnen Festkörpergelenke 19 in derselben Größenordnung liegt.

Die Gelenkstrukturen können hinsichtlich der erforderlichen Deformationskräfte jedoch auch abhängig von der Position der Zentren Z in Bezug auf den Bezugspunkt R so dimensioniert werden, dass die Position des Bezugspunkts R bei Temperaturausdehnungen zumindest über einen vorgegebenen Arbeitstemperaturbereich für die Wägevorrichtung 1 mit hoher Genauigkeit an der selben Stelle gehalten wird.

Das in der Zeichnung dargestellte Verwenden von Füßen 25 am Gehäuse 5 einer Wägezelle 3 bzw. das Verwenden von Füßen an einer an der Trägereinheit zu befestigenden Komponente stellt zusätzlich zur Verwendung von in der jeweils gewünschten Richtung translatorisch beweglichen Verbindungsbereichen sicher, dass sich Spannungen, die durch das Verschrauben entstehen, nicht auf den eigentlichen spannungsempfindlichen Teil in störender Weise übertragen. Die Füße können hierzu, wie in den Fig. 2 und 4 dargestellt, über jeweils relativ dünne Verbindungsbereiche mit dem eigentlichen Gehäuse verbunden sein.

Die in den vorstehenden Ausführungsformen verwendeten monolitisch ausgebildeten Festkörpergelenkstrukturen können auch mittels separater Gelenkelemente realisiert werden. Beispielsweise kann anstelle einer Dünnstelle auch eine separate Blattfeder verwendet werden, die selbstverständlich an beiden Enden entsprechend gehalten bzw. eingespannt sein muss. Darüber hinaus kann auch ein Koppelelement, welches an beiden Enden ein Gelenk, beispielsweise in Form einer Dünnstelle aufweist, durch eine entsprechend lange Blattfeder ersetzt werden. Schließlich kann auch ein starres Koppelelement mit einer üblichen gelenkigen Anbindung an einem oder beiden Enden verwendet werden. All diese Varianten ermöglichen eine Verschiebebewegung eines Verbindungsbereichs entlang einer Kreisbahn, die für kleine Bewegungswege als im Wesentlichen translatorische Bewegung aufgefasst werden kann.

Im Folgenden wird eine weitere Ausführungsform beschrieben, bei der das vorstehend erläuterte Prinzip einer thermisch spannungsfreien Verbindung nicht zur Montage einer Wägezelle auf einer Trägerplatte verwendet wird, sondern zur Anbindung einer Lastplatte an eine Wägesensoreinheit.

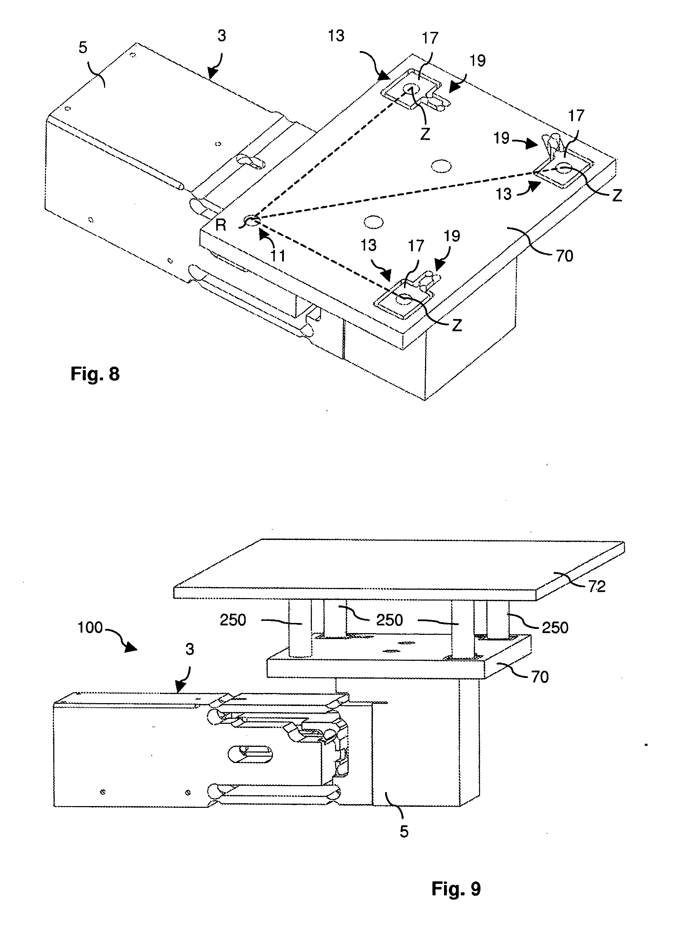

Die Fig. 8 und 9 zeigen eine Wägevorrichtung 100, welche eine Wägesensoreinheit 5 aufweist, an deren Lastaufnahmebereich eine Zwischenplatte 70 ausgebildet ist. Diese Zwischenplatte 70 kann in gleicher Weise ausgestaltet sein, wie die im Zusammenhang mit den Fig. 1 bis 5 erläuterte Trägerplatte 7, so dass auf der Zwischenplatte 70 eine weitere Einheit spannungsfrei befestigbar ist.

Wie aus Fig. 8 ersichtlich, weist die Zwischenplatte 70 einen starren Befestigungsbereich 11 auf, in welchem eine Bohrung zur Befestigung der weiteren Einheit vorgesehen ist. Diese bildet den Bezugspunkt R. Darüber hinaus weist die Zwischenplatte 70 drei bewegliche Befestigungsbereiche 13 mit jeweils einem beweglichen Verbindungsbereich 17 auf, der über ein Festkörpergelenk 19 mit der Zwischenplatte 70 verbunden ist. Bezüglich der Anordnung und Ausbildung der Festkörpergelenke sei auf die vorstehenden Ausführungen in Verbindung mit den Fig. 1 bis 7 verwiesen. Bei dieser in den Fig. 8 und 9 dargestellten Ausführungsform sind die Befestigungsbereiche 11, 13 also am Grundkörper der Wägesensoreinheit vorgesehen und nicht, wie bei den zuvor beschriebenen Ausführungsformen, an der mit dem Grundkörper zu verbindenden Einheit.

Fig. 9 zeigt als solche weitere Einheit eine Lastplatte 72, die vier zylindrische Füße 250 aufweist, welche in nicht näher dargestellter Art und Weise mit der Zwischenplatte 70 verbunden, beispielsweise verschraubt sind. Die Füße 250 können beispielsweise aus einem elektrisch und thermisch isolierenden Material wie einer Keramik bestehen, um die Lastplatte 72 elektrisch und thermisch von der Wägezelle 3 zu isolieren.

## Patentansprüche

1. Wägevorrichtung, insbesondere nach dem Prinzip der elektromagnetischen Kraftkompensation arbeitende Wägevorrichtung,
(a) mit einer Wägesensoreinheit (5) und
(b) mit einer Einheit (7, 72), welche mit der Wägesensoreinheit (5) in wenigstens drei Befestigungsbereichen (11, 13) verbunden ist,
(c) wobei die Einheit (7, 72) oder die Wägesensoreinheit (5) in wenigstens zwei Befestigungsbereichen (13) jeweils einen Verbindungsbereich (17) aufweisen, welcher über eine Gelenkstruktur (19) mit der Einheit (7, 72) oder der Wägesensoreinheit (5) verbunden ist, und
(d) wobei die Gelenkstruktur (19) so ausgebildet ist, dass der durch die Gelenkstruktur (19) ermöglichte Bewegungsweg zumindest so groß ist, wie der maximal mögliche Unterschied der Temperaturausdehnungen der Einheit (7, 72) und der Wägesensoreinheit (5) entlang der Linie zwischen dem Bezugspunkt (R) und dem Zentrum (Z) des Verbindungsbereichs (17) in einem vorgegebenen Temperaturbereich,
**dadurch gekennzeichnet, dass** die Gelenkstruktur (19) so ausgebildet ist, dass sie nur eine im Wesentlichen translatorische Verschiebebewegung des Verbindungsbereichs (17) in einer Richtung ermöglicht, welche durch einen Bezugspunkt (R) und ein Zentrum (Z) des Verbindungsbereichs (17) definiert ist.

2. Wägevorrichtung nach Anspruch 1, **dadurch gekennzeichnet, dass** die Gelenkstruktur (19) als Festkörpergelenkstruktur ausgebildet ist, vorzugsweise als monolitisch mit der Einheit (7) oder der Wägesensoreinheit (5) ausgebildete Gelenkstruktur (19).

3. Wägevorrichtung nach Anspruch 1 oder2, **dadurch gekennzeichnet, dass** die Gelenkstruktur (19) wenigstens eine Dünnstelle (23) aufweist.

4. Wägevorrichtung nach einem der vorhergehenden Ansprüche, **dadurch gekennzeichnet, dass** die Einheit (7, 72) in einem der Befestigungsbereiche (11) im Wesentlichen starr mit der Wägesensoreinheit (5) verbunden ist und dass das Zentrum dieses Befestigungsbereichs (11) den Bezugspunkt (R) bildet.

5. Wägevorrichtung nach einem der vorhergehenden Ansprüche, **dadurch gekennzeichnet, dass** die Befestigungsbereiche (11, 13) bzw. die Verbindungsbereiche (15, 17) in einer Ebene liegen.

6. Wägevorrichtung nach einem der vorhergehenden Ansprüche, **dadurch gekennzeichnet, dass** der Bezugspunkt (R) in einer Achse liegt, in welcher die Lastkraft auf die Wägesensoreinheit wirkt, vorzugsweise im Schnittpunkt der Lastkraftrichtung mit der Ebene, in welcher die Befestigungsbereiche (11, 13) bzw. die Verbindungsbereiche (15, 17) liegen.

7. Wägevorrichtung nach einem der vorhergehenden Ansprüche, **dadurch gekennzeichnet, dass** die Einheit als Trägerplatte (7) ausgebildet ist und dass die Verbindungsbereiche (15, 17) vorzugsweise mit der Trägerplatte (7) über jeweils eine Gelenkstruktur (19) verbunden sind oder dass die Einheit als Lastplatte (72) ausgebildet ist und dass die Verbindungsbereiche (15, 17) vorzugsweise mit der Sensoreinheit (5) über jeweils eine Gelenkstruktur (19) verbunden sind.

8. Wägevorrichtung nach einem der vorhergehenden Ansprüche, **dadurch gekennzeichnet, dass** die Gelenkstruktur (19) wenigstens ein Koppelelement (21) umfasst, welches an einem Ende über jeweils ein erstes, vorzugsweise als Dünnstelle (23) ausgebildetes Gelenk mit dem Verbindungsbereich (17) und am anderen Ende über ein zweites, vorzugsweise als Dünnstelle (23) ausgebildetes Gelenk mit der Einheit (7) oder der Wägesensoreinheit (5) verbunden ist, wobei die Schwenkachsen der Gelenke zueinander parallel und senkrecht zu der Richtung der Verbindungsgeraden durch das Zentrum (Z) des betreffenden Verbindungsbereichs (17) und den Bezugspunkt (R) verlaufen.

9. Wägevorrichtung nach Anspruch 8, **dadurch gekennzeichnet, dass** die Gelenke so ausgebildet sind, dass die durch die Schwenkachsen definierte Ebene senkrecht zur Verbindungsgeraden durch den Bezugspunkt (R) und das Zentrum (Z) des betreffenden Verbindungsbereichs (17) liegt.

10. Wägevorrichtung nach Anspruch 8 oder 9, **dadurch gekennzeichnet, dass** die Gelenkstruktur (19) zwei oder mehr Koppelelemente (21) nach Anspruch 8 umfasst, welche parallelogrammartig angeordnet sind.

11. Wägevorrichtung nach Anspruch 9, **dadurch gekennzeichnet, dass** die Gelenkstruktur (19) zwei oder mehr Koppelelemente (21) umfasst, welche über jeweils zwei vorzugsweise als Dünnstellen (23) ausgebildete Festkörpergelenke mit dem Verbindungsbereich (17) und der Trägereinheit (7) oder der Wägesensoreinheit (5) verbunden sind, wobei die Schwenkachsen der Gelenke jeweils eines Koppelelements in einer Ebene liegen und wobei jeweils ein oder mehrere Koppelelemente (21) jeweils auf gegenüberliegenden Seiten des Verbindungsbereichs (17) anbeordnet sind.

12. Wägevorrichtung nach einem der vorhergehenden Ansprüche, **dadurch gekennzeichnet, dass** die Wägesensoreinheit (5) oder die Einheit (7, 72) Befestigungsfüße (25, 250) aufweisen, welche auf Verbindungsbereichen (15, 17) der Einheit (7) oder der Wägesensoreinheit (5) aufliegen und welche mit den Verbindungsbereichen (17) verbunden sind, vorzugsweise durch Verschrauben.

## Claims

1. A weighing device, in particular a weighing device operating according to the principle of electromagnetic force compensation,
(a) having a weighing sensor unit (5), and
(b) having a unit (7, 72) which is connected to the weighing sensor unit (5) in at least three securing regions (11, 13),
(c) wherein the unit (7, 72) or the weighing sensor unit (5) has in at least two securing regions (13) a respective connecting region (17) which is connected to the unit (7, 72) or the weighing sensor unit (5) by way of a joint structure (19), and
(d) wherein the joint structure (19) is formed in such a way that the path of movement rendered possible by the joint structure (19) is at least as large as the maximum possible difference between the temperature expansions of the unit (7, 72) and of the weighing sensor unit (5) along the line between the reference point (R) and the centre (Z) of the connecting region (17) in a predefined temperature range,
**characterised in that**
the joint structure (19) is formed in such a way that it only renders possible a substantially translatory movement of displacement of the connecting region (17) in a direction which is defined by a reference point (R) and a centre (Z) of the connecting region (17).

2. A weighing device according to claim 1, **characterised in that** the joint structure (19) is formed as a solid-joint structure, preferably as a joint structure (19) that is formed monolithically with the unit (7) or the weighing sensor unit (5).

3. A weighing device according to claim 1 or 2, **characterised in that** the joint structure (19) has at least one thin point (23).

4. A weighing device according to one of the preceding claims, **characterised in that** the unit (7, 72) is substantially rigidly connected to the weighing sensor unit (5) in one of the securing regions (11), and **in that** the centre of this securing region (11) constitutes the reference point (R).

5. A weighing device according to one of the preceding claims, **characterised in that** the securing regions (11, 13) or the connecting regions (15, 17) respectively lie in one plane.

6. A weighing device according to one of the preceding claims, **characterised in that** the reference point (R) lies in an axis in which the load force acts on the weighing sensor unit, preferably at the point of intersection of the direction of the load force with the plane in which the securing regions (11, 13) or the connecting regions (15, 17) respectively lie.

7. A weighing device according to one of the preceding claims, **characterized in that** the unit is formed as a carrier plate (7) and **in that** the connecting regions (15, 17) are preferably connected to the carrier plate (7) by way of a respective joint structure (19), or **in that** the unit is formed as a load plate (72) and **in that** the connecting regions (15, 17) are preferably connected to the sensor unit (5) by way of a respective joint structure (19).

8. A weighing device according to one of the preceding claims, **characterised in that** the joint structure (19) comprises at least one coupling element (21) which at one end is connected to the connecting region (17) by way of a first respective joint, preferably formed as a thin point (23), and at the other end is connected to the unit (7) or the weighing sensor unit (5) by way of a second joint, preferably formed as a thin point (23), wherein the swivel axes of the joints run parallel to each other and perpendicularly to the direction of the straight connecting line through the centre (Z) of the relevant connecting region (17) and the reference point (R).

9. A weighing device according to claim 8, **characterised in that** the joints are formed in such a way that the plane defined by the swivel axes lies perpendicularly to the straight connecting line through the reference point (R) and the centre (Z) of the relevant connecting region (17).

10. A weighing device according to claim 8 or 9, **characterised in that** the joint structure (19) comprises two or more coupling elements (21) according to claim 8 which are arranged in the manner of a parallelogram.

11. A weighing device according to claim 9, **characterised in that** the joint structure (19) comprises two or more coupling elements (21) which are connected to the connecting region (17) and the carrier unit (7) or the weighing sensor unit (5) by way of two respective solid joints, preferably formed as thin points (23), wherein the swivel axes of the joints of a respective coupling element lie in one plane and wherein one or more respective coupling elements (21) are respectively arranged on opposing sides of the connecting region (17).

12. A weighing device according to one of the preceding claims, **characterised in that** the weighing sensor unit (5) or the unit (7, 72) has securing feet (25, 250) which rest on connecting regions (15, 17) of the unit (7) or of the weighing sensor unit (5) and which are connected to the connecting regions (17), preferably by means of screwing.

## Revendications

1. Dispositif de pesage, en particulier dispositif de pesage fonctionnant selon le principe de la compensation électromagnétique des forces, comprenant
(a) une unité de capteur de pesage (5), et
(b) une unité (7, 72) qui est reliée à l'unité de capteur de pesage (5) par au moins trois zones de fixation (11, 13),
(c) l'unité (7, 72) ou l'unité de capteur de pesage (5) comportant chacune, dans au moins deux zones de fixation (13), une zone de raccord (17), qui par l'intermédiaire d'une structure articulée (19) est reliée à l'unité (7, 72) ou à l'unité de capteur de pesage (5), et
(d) la structure articulée (19) est configurée de telle sorte que le déplacement autorisé par l'intermédiaire de la structure articulée (19) soit au moins aussi grand que la différence maximale possible entre la dilatation thermique de l'unité (7, 72) et celle de l'unité de capteur de pesage (5) le long de la ligne située entre le point de référence (R) et le centre (Z) de la zone de raccord (17) dans une plage de températures prédéfinie,
**caractérisé en ce que** la structure articulée (19) soit configurée de telle sorte qu'elle permette seulement un coulissement, essentiellement en translation, de la zone de raccord (17) dans une direction qui est définie par un point de référence (R) et un centre (Z) de la zone de raccord (17).

2. Dispositif de pesage selon la revendication 1, **caractérisé en ce que** la structure articulée (19) est formée en tant qu'une structure articulée solide, de préférence sous forme d'une structure articulée à configuration monolithique avec l'unité (7) ou avec l'unité de capteur de pesage (5).

3. Dispositif de pesage selon la revendication 1 ou 2, **caractérisé en ce que** la structure articulée (19) comprenne au moins une partie étroite (23).

4. Dispositif de pesage selon l'une des revendications précédentes, **caractérisé en ce que** l'unité (7, 72) est reliée à l'unité de capteur de pesage (5) dans l'une des zones de fixation (11) d'une manière essentiellement rigide, et que le centre de cette zone de fixation (11) forme le point de référence (R).

5. Dispositif de pesage selon l'une des revendications précédentes, **caractérisé en ce que** les zones de fixation (11, 13) ou les zones de raccord (15, 17) se trouvent dans un plan.

6. Dispositif de pesage selon l'une des revendications précédentes, **caractérisé en ce que** le point de référence (R) se trouve sur un axe dans lequel la force de charge agit sur l'unité de capteur de pesage, de préférence au point d'intersection de la direction de la force de charge avec le plan dans lequel se trouvent les zones de fixation (11, 13) ou les zones de raccord (15, 17).

7. Dispositif de pesage selon l'une des revendications précédentes, **caractérisé en ce que** l'unité est configurée comme une plaque support (7), et que les zones de raccord (15, 17) sont de préférence reliées à la plaque support (7), chacune par l'intermédiaire d'une structure articulée (19), ou que l'unité est configurée comme une plaque de charge (72), et que les zones de raccord (15, 17) sont reliées de préférence à l'unité de capteur (5), chacune par l'intermédiaire d'une structure articulée (19).

8. Dispositif de pesage selon l'une des revendications précédentes, **caractérisé en ce que** la structure articulée (19) comprend au moins un élément de couplage (21), dont chacun est relié à la zone de raccord (17) au niveau d'une extrémité par l'intermédiaire d'une première articulation, de préférence configurée comme une partie étroite (23) et, est relié à l'unité (7) ou à l'unité de capteur de pesage (5) au niveau de l'autre extrémité par l'intermédiaire d'une deuxième articulation, de préférence configurée comme une partie étroite (23), les axes de rotation des articulations se trouvant parallèles l'un à l'autre et perpendiculaires à la direction de la droite de raccord passant par le centre (Z) de la zone de raccord correspondante (17) et par le point de référence (R).

9. Dispositif de pesage selon la revendication 8, **caractérisé en ce que** les articulations sont configurées de telle sorte que le plan défini par les axes de rotation soit perpendiculaire à la droite de raccord passant par le point de référence (R) et le centre (Z) de la zone de raccord correspondante (17).

10. Dispositif de pesage selon la revendication 8 ou 9, **caractérisé en ce que** la structure articulée (19) comprenne deux ou plus éléments de couplage (21) selon la revendication 8 qui sont disposés sous la forme d'un parallélogramme.

11. Dispositif de pesage selon la revendication 9, **caractérisé en ce que** la structure articulée (19) comprenne deux ou plus éléments de couplage (21), dont chacun est relié à la zone de raccord (17) et à l'unité support (7) ou à l'unité de capteur de pesage(5) par l'intermédiaire de deux articulations solides de préférence configurées sous forme de parties étroites (23), les axes de rotation des articulations de chacun des éléments de couplage se trouvant dans un plan, et chacun du ou des plusieurs élément(s) de couplage (21) étant disposés sur des côtés opposés de la zone de raccord (17).

12. Dispositif de pesage selon l'une des revendications précédentes, **caractérisé en ce que** l'unité de capteur de pesage (5) ou l'unité (7, 72) comprend des pieds de fixation (25, 250), qui s'appuient sur des zones de raccord (15, 17) de l'unité (7) ou de l'unité de capteur de pesage (5), et qui sont reliés aux zones de raccord (17), de préférence par vissage.
